# EUROPEAN PATENT APPLICATION

(11) **EP 3 096 280 A1**
(43) Date of publication of application: **23.11.2016**
(21) Application number: 15736976.0
(22) Date of filing: 13.01.2015
(51) Int. Cl.: G06Q 40/02, G06Q 30/02

(54) **CARD BENEFIT PROVIDING SYSTEM AND METHOD FOR AUTOMATICALLY ADJUSTING CARD BENEFITS FOR EACH CUSTOMER BY APPLYING CARD USAGE INFORMATION**

(30) Priority: 14.01.2014 KR 20140004635
(71) Applicant: Superstring Inc., Dong-gu Daegu 41256 (KR)
(72) Inventor: EUN, Sukhoon JC, Suseong-gu, Daegu 706-911 (KR)
(74) Representative: Herrmann, Uwe
(86) International application number: PCT/KR2015/000312
(87) International publication number: WO 2015/108311

(57) **Abstract**

Provided are a card benefit providing system and method for automatically adjusting card benefits for each customer by applying card usage information, the card benefit providing system including: a benefit managing server (100) including: a benefit control unit (110) controlling, in an integrated manner, providing of card benefits according to card usage history information in connection with a payment action using a card possessed by a customer who desires to receive an automatic card benefit adjusting service; and a payment information database unit (120) storing and managing the card usage history information according to each customer in a database.

## Description

### [Technical Field]

The present invention relates to card benefit providing systems and methods for automatically adjusting and applying card benefits provided by card companies to card members by reflecting card usage information according to the individual card members. More particularly, the present invention relates to a card benefit providing system and method for automatically adjusting card benefits for each customer by applying card usage information, that are configured such that a benefit rate (a discount or accumulation of rewards such as points, miles, etc.) which a customer can receive is automatically adjusted and applied by a benefit managing server according to card usage history information of the customer, and card benefits resulting therefrom are provided without needing to inconveniently self-check his or her propensity to consume in order for the customer (i.e. a user or card customer) to receive more favorable card benefits and without needing to inconveniently change the kind of his or her card in use to a card suitable for the propensity to consume, or to inconveniently change the content of the card benefits given to the customer. Thus, the system and method enable a benefit for actually accounting for high-consumption items among predetermined card benefits to be automatically highly adjusted, and a benefit for actually accounting for low-consumption items to be automatically lowly adjusted so that the user can enjoy a card usage service having high economic satisfaction even when carrying out only a simple consumption activity, without requiring further actions for a search in respect to card benefits, self-checking the propensity to consume, analysis for consumption patterns, the issuance of a new card, a change in card benefits by access to a card server, or the like.

### [Background Art]

According to the development of a credit card infrastructure and the development of electronic commerce via the internet and smart phones, the card users of credit cards, check cards, or the like have possessed many cards in order to find a card that suitably provides the better benefits.

In order for card companies to induce customers who own many cards use the respective companies' cards, the card companies have provided various additional services by more discriminative and new methods. In particular, they have developed and expanded customer-centered services.

However, despite the fact that various additional services have been developed and provided according to each card company, customers have various difficulties in conveniently enjoying the benefits.

In general, when signing up for a membership, a card customer verifies various kinds of card benefits with reference to advertisements provided by card companies or the like and compares the benefits to one another to roughly analyze his or her consumption patterns, then selecting a card that is expected to be suitable to receive more benefits.

In such a case, a consumer (card customer) should take the time to verify and compare the benefits of various cards provided by many card companies and to check his or her consumption patterns by himself or herself, and has difficulty in determining and selecting a card that is expected to be suitable for the consumption patterns.

Recently, card companies, that provide services for enabling a direct change in consumption items targeted for benefits to be set by consumers by accessing respective servers of the card companies, have been created.

However, even in such a case, the consumers should take the time to verify and analyze card usage patterns by themselves and to change items targeted for benefits to be provided by a relevant card company to them by directly accessing the card company's server (using an application or website).

According to the conventional card benefit providing system and method including the cases described above, the contents of benefits (consumption items for which benefit can be provided, affiliated stores, a discount rate, a saving rate and the like) provided to a card user may be set when the card user signs up a membership for a card, or changes items targeted for benefits after directly connecting to a relevant card company's server. In other words, whether or not the consumer receives benefits, and the detailed contents of the benefits are predetermined before the consumer provides payment with a relevant card. Once the contents of the benefits are determined, they stay the same regardless of the consumer's consumption patterns.

In such conventional card benefit providing system and method, the consumers receive card benefits in such an order as ① to set benefits of a specific card when signing up for a membership for the card, and ② to receive the benefits when carrying out payment with the card.

According to the example of a more developed recent system and method, the consumers receive card benefits in such an order as ③ to set benefits of a specific card when signing up for a membership for the card, ④ to apply the benefits when carrying out payment with the card, ⑤ to recognize a need to change the benefits of the card used by each consumer, ⑥ to directly change, by the consumer, the card benefits, and ⑦ to receive changed card benefits when providing payment with the card.

In the case of the conventional card benefit providing system and method performed in the order above, the following problems occur.

First, since a consumer (card customer) should check his or her consumption pattern by himself or herself when signing up for the membership of a card, he or she gets various cards having many benefits which are deemed to be advantageous to him or her. After this, in the case where a change in the consumption pattern occurs, the predetermined card benefits are unusable due to a new card consumption patterns.

Second, like in the example of the more developed card benefit providing system and method, even though a consumer can change the content of card benefits after signing up for the membership of a card, the consumer should personally recognize the need to change the benefits of a card used by him or her, and should directly change the card benefits by connecting to a relevant card company's server. Thus, in the case where the consumer does not make such efforts, efficiency of the predetermined card benefits is reduced.

Third, even though a consumer can directly change the content of card benefits after signing up for the membership of a card, the consumer may not personally recognize a change in his or her consumption patterns and necessity to change card benefits according to such a change. Due to this, the predetermined card benefits are not advantageously applied to the consumer's card usage pattern.

Korean Patent Laid-Open Publication No. 10-2009-0099853 (entitled "Credit Card Payment System and Method for Automatically Selecting and Approving Optimum Card of User", hereinafter referred to as Conventional Art Document 1) discloses a credit card payment system and a credit card payment method for automatically selecting an optimum credit card for paying a payment amount to a relevant affiliated store when a user pays with an integrated card including information about a plurality of credit cards.

### [Conventional Art Document]

### [Patent Document]

Korean Patent Laid-Open Publication No. 10-2009-0099853 (published on September 23, 2009)

### [Disclosure]

### [Technical Problem]

The present invention has been devised in order to solve the above problems occurring in the conventional art, and an object of the present invention is to provide a card benefit providing system and method, that are configured such that a benefit rate (a discount or saving rate) which a customer can receive is automatically adjusted and applied by a benefit managing server according to card usage history information of the customer, and card benefits resulting therefrom are provided without needing to inconveniently self-check his or her propensity to consume in order for the customer (i.e. a user or card customer) to receive more favorable card benefits and without needing to inconveniently change the kind of the card in use to a card suitable for the propensity to consume, or to inconveniently change the content of the card benefits given to the customer, thereby enabling a card benefit for actually accounting for high-consumption items among card benefits predetermined by the card user to be automatically highly adjusted. As a result, the system and method enable the consumer to receive a more favorable card benefit rate even when carrying out only consumption activity without requiring further actions for a search in regards to card benefits and automatically adjust card benefits for each customer by reflecting card usage information for higher economic utility.

### [Technical Solution]

In one general aspect, a card benefit providing system for automatically adjusting card benefits for each customer by applying card usage information includes a benefit managing server 100 including: a benefit control unit 110 controlling, in an integrated manner, providing of card benefits according to card usage history information in connection with a payment action using a card possessed by a customer who desires to receive an automatic card benefit adjusting service; and a payment information database unit 120 storing and managing the card usage history information according to each customer in a database.

The benefit control unit 110 of the benefit managing server 100 may analyze an amount spent on each of the various predetermined consumption items using the card usage history information and may then automatically control the card benefits according to the amount spent on various consumption items, thereby enabling the card benefits for each customer to be automatically adjusted by reflecting the card usage information.

In such a case, the benefit control unit 110 of the benefit managing server 100 may divide the amount spent on each of the various consumption items into predetermined sections and may apply card benefit providing rates matched with the respective sections corresponding to the amount on spent on each of the various consumption items to provide the card benefits, thereby enabling the card benefits for each customer to be automatically adjusted by reflecting the card usage information.

Alternatively, the benefit control unit may repeatedly increase the card benefits to the extent of a predetermined value when the amount spent on each of the various consumption items is greater than the predetermined value or may repeatedly reduce the card benefits to the extent of the predetermined value when the amount spent on each of the various consumption items is less than the predetermined value.

In addition, the benefit control unit may adjust the card benefits to be matched with another card benefit pattern when a discounted amount resulting from the other card benefit pattern is greater than a discounted amount resulting from a current card benefit pattern beyond a predetermined amount by comparing the discounted amount resulting from the current card benefit pattern with the discounted amount resulting from the other card benefit pattern which is adjusted and provided for each of the various consumption items.

Moreover, the benefit control unit 110 of the benefit managing server 100 may be connected to the benefit managing server 100 via a network and may transmit current card benefit information, expected card benefit information adjusted and provided according to each of the various consumption items, and an expected discounted amount resulting from adjusted card benefits to a mobile terminal 1 held by the customer.

Also, the card benefit providing system for automatically adjusting the card benefits for each customer by applying the card usage information may further include: a backup server 200 connected to the benefit managing server 100 via a network and backing up various pieces of information stored in the benefit managing server 100 according to a predetermined cycle or an external request; and a security server 300 protecting the information stored in the benefit managing server 100 according to a predetermined security policy.

In another general aspect, a card benefit providing method for automatically adjusting card benefits for each customer by applying card usage information includes: making payment with a card (S100), of performing a payment action using a credit card or a check card possessed by a customer who desires to receive an automatic card benefit adjusting service; determining, by a benefit managing server, card benefits (S200), of adjusting and determining the card benefits according to card usage history information resulting from the making of payment with a card (S100); and providing, by the benefit managing server, the card benefits (S300), of providing the card benefits determined through the determining of card benefits (S200).

In this case, the determining of card benefits (S200) may include analyzing an amount spent on each of the various predetermined consumption items using the card usage history information, then adjusting the card benefits according to the amount spent on each of the various consumption items, and dividing the amount spent on each of the various consumption items into predetermined sections, thereby providing the card benefits by applying the card benefit providing rates matched with the respective sections corresponding to the amount spent on each of the various consumption items.

Alternately, the determining of card benefits may include: analyzing an amount spent on each of various predetermined consumption items using the card usage history information, and thereafter, controlling card benefits according to the amount spent on each of the various consumption items; and repeatedly increasing the card benefits to the extent of a predetermined value when the amount spent on each of the various consumption items is greater than the predetermined value, or repeatedly reducing the card benefits to the extent of the predetermined value when the amount spent on each of the various consumption items is less than the predetermined value, thereby adjusting and determining the card benefits.

In addition, the determining of card benefits may include: analyzing an amount spent on each of various predetermined consumption items using the card usage history information, and thereafter, adjusting the card benefits according to the amount spent on each of the various consumption items; comparing a discounted amount resulting from a current card benefit pattern with a discounted amount resulting from another card benefit pattern which is adjusted and provided for each of the various consumption items; and adjusting and determining the card benefits to be matched with the other card benefit pattern when the discounted amount resulting from the other card benefit pattern is greater than the discounted amount resulting from the current card benefit pattern beyond a predetermined amount.

### [Advantageous Effects]

According to a card benefit providing system and method for automatically adjusting card benefits for each customer by applying card usage information according to an embodiment of the present invention, which are configured as described above, a predetermined benefit adjusting condition is applied to card usage history information of a customer (a consumer or card customer) using a benefit control unit 110 of a benefit managing server 100; and optimum card benefits deducted therefrom are set as new benefits which the customer receives, whereby the customer can receive card benefits that are automatically adjusted to be favorable to the customer based on a card usage history of the customer after a fixed card usage period has passed. Thus, it is advantageous in that "a card is first used, and card benefits are automatically adjusted later".

As a specific example, in the case where coffee consumption is generated from 'a coffee'-related item, and a card benefit has been set such that a 3% discount or saved money of a payment amount to an affiliated store is applied, if an amount for coffee spent by a specific consumer in January and February is 100,000 won, the consumer receives the benefit of a discount or saved money corresponding to 3,000 won (corresponding to 3% of 100,000 won) in January and February.

According to the card benefit providing system and method of the present invention for automatically adjusting card benefits for each customer by applying card usage information, in the example above, the card benefit provided in January is a discount or save money of 3,000 won (corresponding to 3% of 100,000 won). Although the card benefit provided in January is 3,000 won (corresponding to 3% of 100,000 won), when it is determined by the system and method according to the present embodiment that the amount of 100,000 won spent on 'coffee' in January meets a requirement for a 2% increase in the benefit rate, a card benefit to be provided to the relevant consumer in February is automatically highly adjusted to 5%. Consequently, the consumer may receive a benefit of 5,000 won (corresponding to 5% of 100,000 won). Due to this, the consumer can enjoy an increase in economic utility corresponding to 2,000 won for the 'coffee'-related consumption item in February easily compared to the conventional method.

As such, although a user does not perform a request to apply for a separate card or to change the card benefits, since the benefit rate is automatically adjusted by a relevant card company, the user's card benefit, which is widely applied to various consumption items, can be focused on frequent or high consumption items, and the utility of consumption can be maximized by increasing the benefit rate.

Furthermore, although a relevant card company may experience a cost increase due to increased benefits compared to the conventional system and method at the initial stage in which the system and method according to the present invention are newly executed, they can rapidly reflect the users' propensity to consume and can automatically adjust a card benefit rate, so that consumers can recognize the advantage of this system and method that "the more the consumers use their card, the higher they can enjoy benefits". As a result, it is expected that consumption will be promoted, and customer satisfaction to the card company will be improved.

Providing of such exceptionally customized card services can lead to an increase in card members, and as a result, the card benefit providing system and method according to the present invention can be effective to make higher profits compared to the conventional system and method.

### [Description of Drawings]

FIG. 1 is a view briefly showing a card benefit providing system for automatically adjusting card benefits for each customer by applying card usage information according to an embodiment of the present invention;
FIG. 2 is a view specifically showing the card benefit providing system for automatically adjusting card benefits for each customer by applying card usage information according to the embodiment of the present invention;
FIG. 3 is a view showing a card benefit providing system for automatically adjusting card benefits for each customer by applying card usage information according to another embodiment of the present invention;
FIG. 4 is a flow chart showing a card benefit providing method for automatically adjusting card benefits for each customer by applying card usage information according to an embodiment of the present invention;

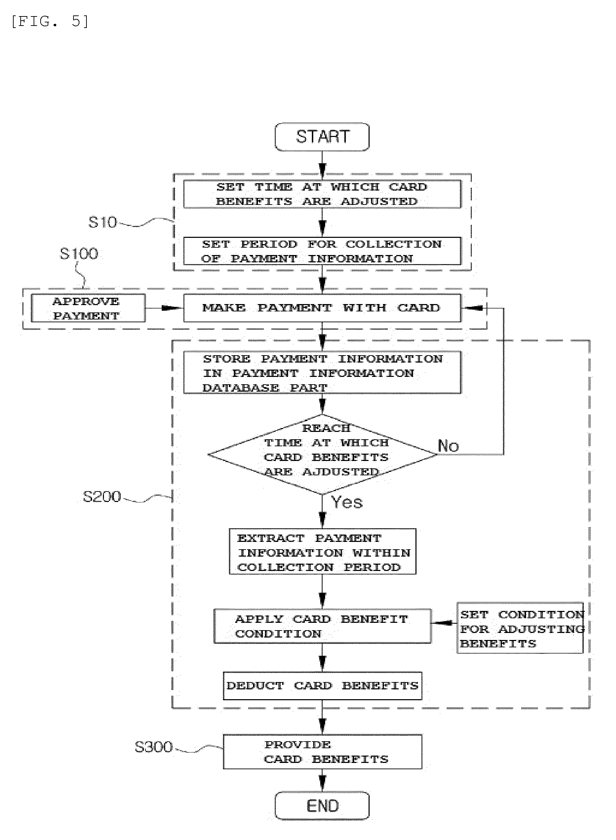

FIG. 5 is a flow chart showing a card benefit providing method for automatically adjusting card benefits for each customer by applying card usage information according to another embodiment of the present invention, the method being capable of extracting card payment information within a predetermined collection period after setting a specific period intended to reflect a card payment history, thereby deducting and providing new card benefits based on the card payment information, with regard to determining a time at which the card benefits are adjusted and deducting new benefits by reflection a card payment history within a fixed period upon approaching the predetermined time; and
FIG. 6 is a view showing a card benefit providing system for automatically adjusting card benefits for each customer by applying card usage information according to a still another embodiment of the present invention, the system being capable of providing new card benefits based on information about the number of times being paid with a card, a position where payment is performed with the card, and the like, as well as a card payment amount.

### [Best Mode]

Hereinafter, a card benefit providing system and method for automatically adjusting card benefits for each customers by applying card usage information according to one embodiment of the present invention will be described in detail with reference to accompanying drawings. The accompanying drawings are provided as examples for sufficiently transmitting an idea of the present invention to one of ordinary skill in the art. Accordingly, the present invention should not be limited to the drawings to be provided below and can be embodied in various forms. Also, the same reference numerals refer to similar elements throughout the specification.

Unless otherwise defined, all terms including technical and scientific terms used herein have the same meaning as commonly understood by one of ordinary skill in the art to which the present invention belongs. In the following description and the accompanying drawings, it is to be noted that, when the functions of conventional elements, such as functions and elements for performing announcement to consumers or consumers' approvals when automatically changed benefits are applied, may make the gist of the present invention unclear, a detailed description of those elements will be omitted.

Furthermore, the system used herein means the assembly of constitutive elements including devices, instruments, means and the like that are structurized and regularly interact with each other in order to carry out necessary functions.

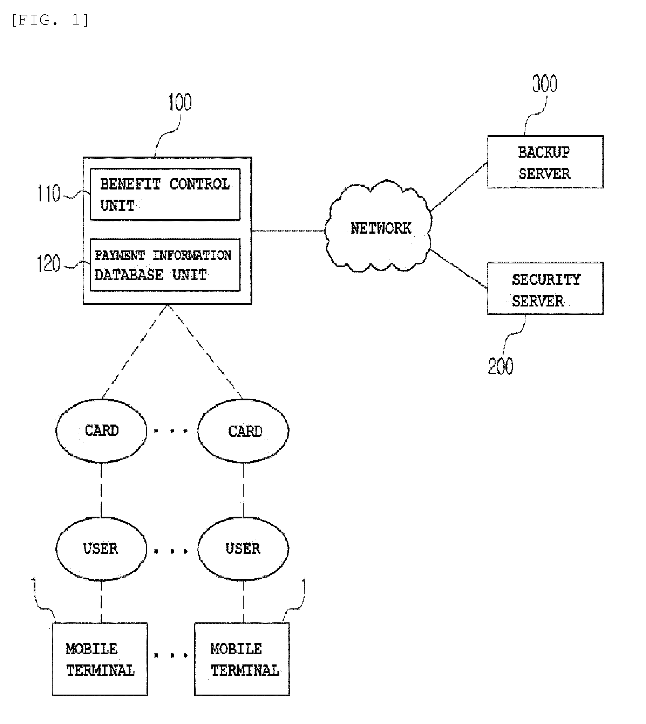

FIG. 1 is a view showing a card benefit providing system for automatically adjusting card benefits for each customer by applying card usage information according to an embodiment of the present invention. The card benefit providing system for automatically adjusting card benefits for each customer by applying card usage information according to an embodiment of the present invention will be described in detail with reference to FIG. 1.

The card benefit providing system for automatically adjusting card benefits for each customer by applying card usage information according to an embodiment of the present invention may include: a benefit managing server 100 connected to a network; a backup server 200; and a security server 300.

As illustrated in FIG. 1, the benefit managing server 100 may include a benefit control unit 110 and a payment information database unit 120.

The respective elements are reviewed in detail as follows.

When a card payment action is carried out by the benefit control unit 110 of the benefit managing server 100 in the card affiliated store using a credit card or a check card owned by a user (a customer or card user) who wants to receive an automatic card benefit adjusting service, namely, when a credit card or a check card is used, the benefit control unit 110 of the card benefit managing server 100 may control, in an integrated manner, the providing of card benefits according to card usage history information.

The payment information database unit 120 may store and manage the card usage history information of the user in a database according to each user.

Thus, a customized automatic card benefit adjusting service, which is optimized based on card usage history information for each user, may be easily provided. According to the user's request, since the information stored in the payment information database unit 120 is provided, it is advantageous in that the user can clearly verify the details of spending by itself.

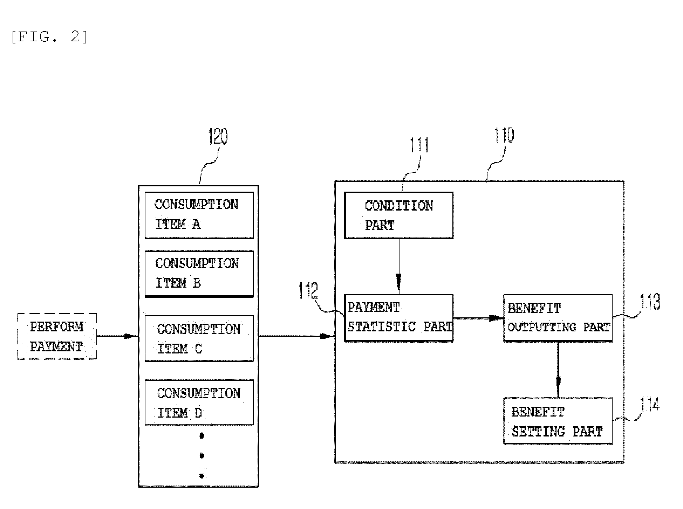

In detail, as illustrated in FIG. 2, the payment information database unit 120 may analyze consumed amounts according to each of the various predetermined consumption items (consumption item A, consumption B...) using the card usage history information and may then automatically adjust the card benefit according to the consumed amounts for each of the various consumption items in the benefit control unit 110.

In other words, when the user performs payment using a credit card or a check card, the benefit control unit 110 may determine whether a consumption item belongs to any consumption item among various consumption items that are predetermined by the card affiliated store in which the payment is performed, and thus may determine the user's card consumption propensity by analyzing payment amounts according to each consumption item so that card benefits can be adjusted.

### First Embodiment

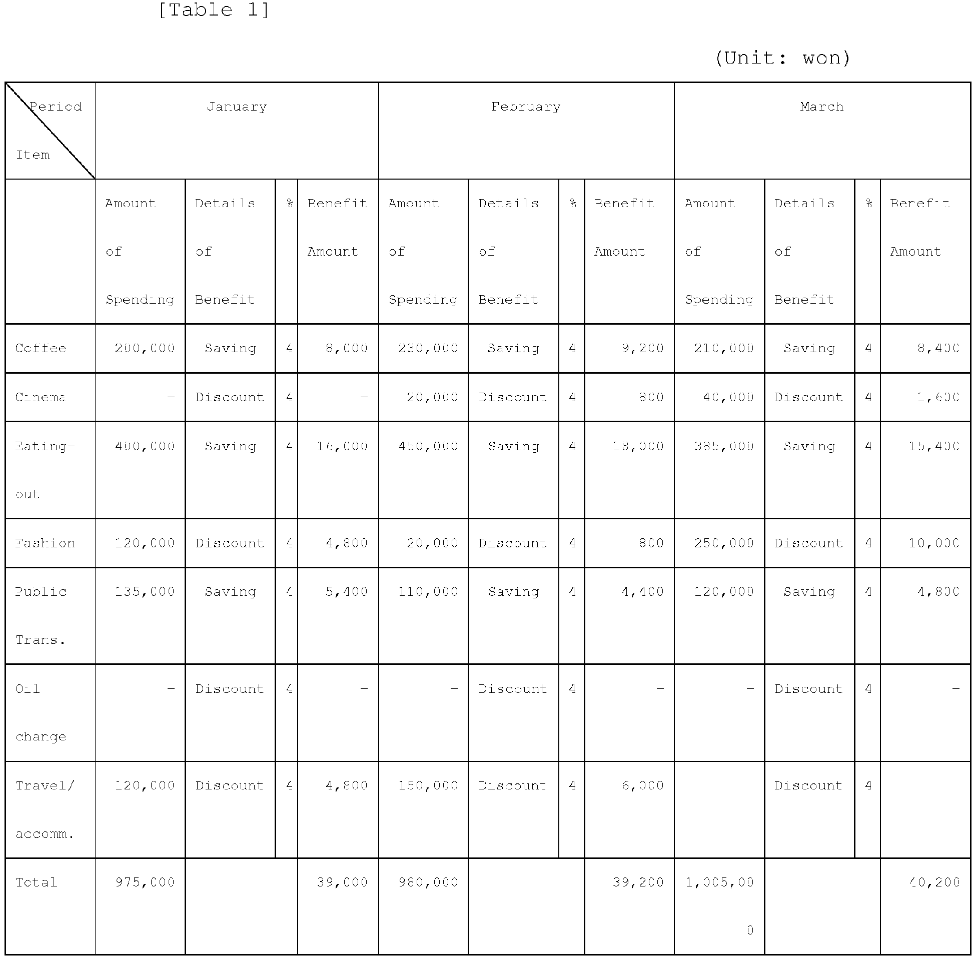

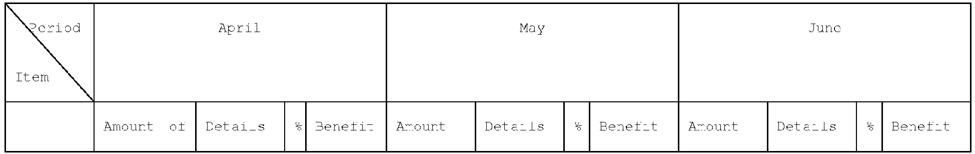

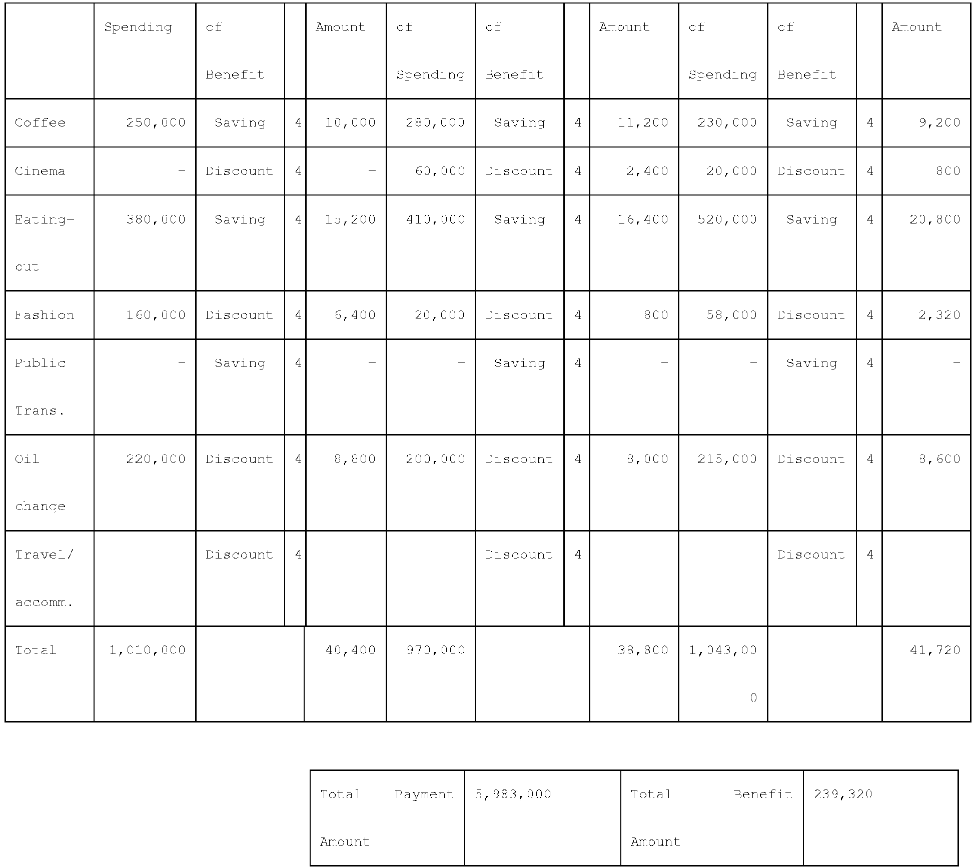

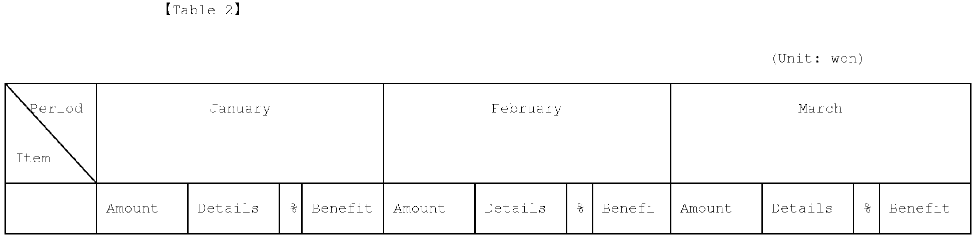

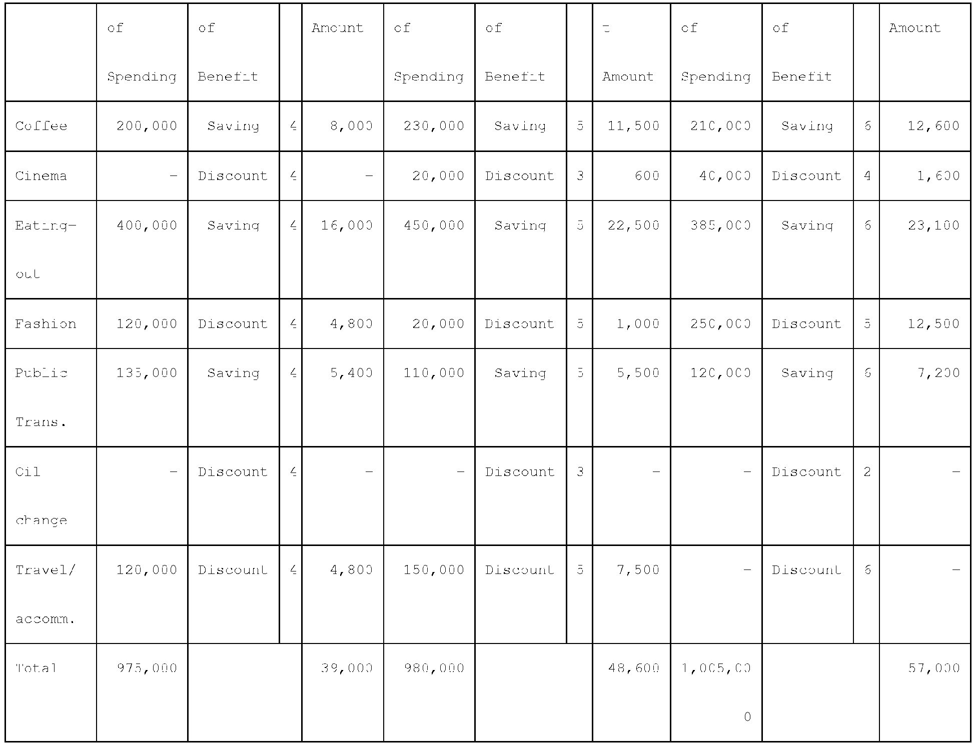

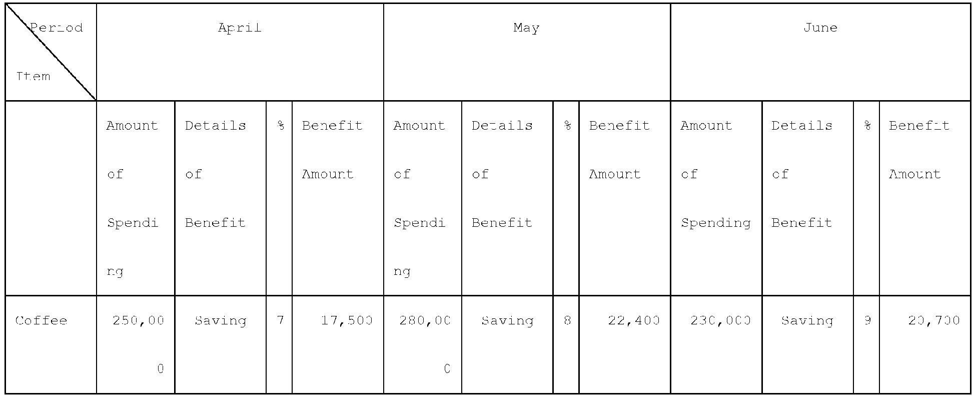

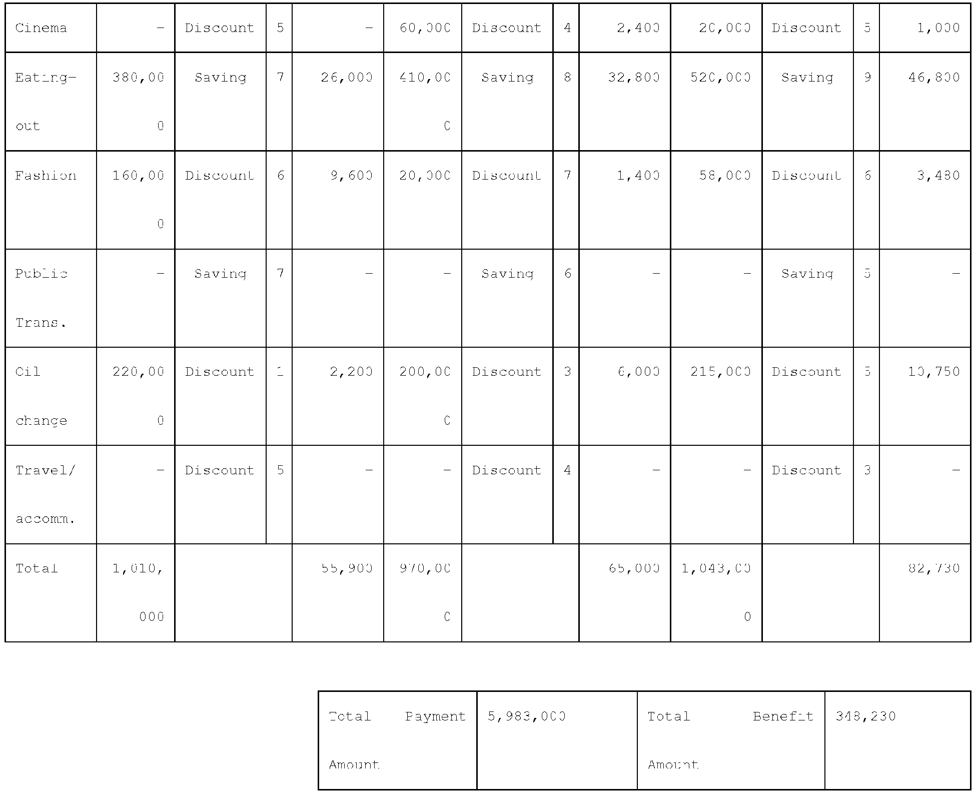

In Table 1 above, the details of card payment history performed by imaginary consumer A during 6 months, and benefit amounts resulting from card benefits are summarized. This is based on a conventional card benefit providing system and method, and as described above, card benefit rates are fixed.

In contrast, Table 2 above shows the results rendered by the card benefit providing system for automatically adjusting card benefits for each customer by applying card usage information according to the embodiment of the present invention. Characteristically, the card benefit rate was changed by reflecting card usage history information per month, and the card usage history and each benefit amount caused by the card benefit were arranged by applying a changed card benefit rate next month.

In detail, in Table 1, imaginary consumer A received a card benefit corresponding to 4% of the payment amount by performing card payment for 'travel/accommodation'-related consumption item in January and February. However, it can be confirmed that, despite the fact that card payment for the item was nonexistent during the period of from March to June, a card benefit rate has been fixed to 4%. Although a high benefit rate is applied to an item for which no consumption occurs, economic utility which the consumer receives is only zero.

In addition, despite the fact that imaginary consumer A introduced a scenario for card benefit in which gas costs will sharply increase because he or she will drive a car from April, the card benefit rate for the gas costs has been fixed to 4% which is identical to that provided during the period of from January to March showing the state in which payment for the 'gas cost'-related consumption item is nonexistent. Thus, this method cannot be deemed to be a method of providing the best card benefit to the consumer.

In contrast, in Table 2 provided by the card benefit providing system and method for automatically adjusting card benefits for each customer by applying card usage information according to the embodiment of the present invention, the card benefit rate is automatically changed and applied per month.

Reviewing the 'travel/accommodation'-related consumption item, since consumption for this item was generated in January and February, the card benefit was adjusted to increase a card benefit rate by March. However, since consumption for the item usually disappears during the period from March to June, the card benefit rate was adjusted to gradually reduce by reflecting such a situation.

Reviewing the 'gas cost'-related consumption item, since consumption for this item was nonexistent during the period of from January to March, the card benefit rate was adjusted to gradually reduce by reflecting such a situation. However, when the relevant consumer starts to drive a car from April, since it is expected that consumption for gas costs will rapidly increase, the card benefit rate for the 'gas cost'-related consumption item was adjusted to gradually highly increase in May and June.

That is, by using the amount spent on each of the various consumption items during a period predetermined by a card company which desires to receive the automatic card benefit adjusting service, the benefit control unit 110 of the benefit managing server 100 may repeatedly increase the card benefit to the extent of a predetermined value when the amount spent on each of the various consumption items is greater than the predetermined value or may repeatedly reduce the card benefit to the extent of the predetermined value when the amount spent on each of the various consumption items is less than the predetermined value, thereby adjusting the card benefit.

Thus, in the first embodiment of the present invention, the predetermined period is set to one month, and the card benefit provided from a payment statistic part 112 may be adjusted according to a set value and a predetermined value entered via a condition part 111 of the benefit control unit 110. In addition, the user' card benefit may be newly applied and provided using a benefit outputting part 113 and a benefit setting part 114.

As such, in the method disclosed by the present invention, since a future card benefit rate is automatically adjusted by reflecting the card user's usage history, useless benefits caused by the fixed benefit rate for an item from which no consumption occurs are automatically reduced. In reverse, the benefit rate for an item for showing high consumption is highly adjusted so that more benefits can be provided to the item showing high consumption according to necessity of the relevant consumer. This is effective to maximize the economic utility of consumer's card payment and to promote future consumption.

### Second Embodiment

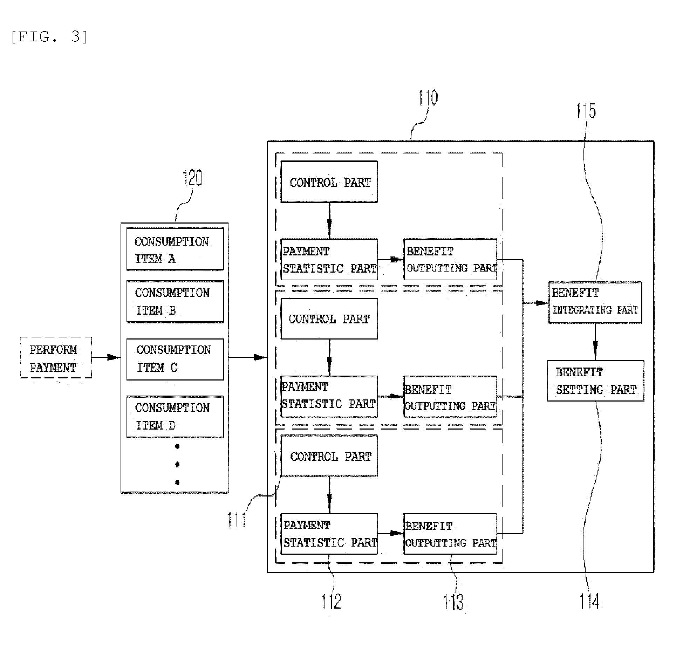

As illustrated in FIG. 3, the payment statistic part 112 reflects card usage history information per the unit of one day, per unit less than the unit of one day, or in real time so that the card benefits can be adjusted according to a set value and a predetermined value entered by the condition part 111. The user's card benefit rate may be rapidly automatically changed and applied using the benefit outputting part 113 and the benefit setting part 114.

In this case, the benefit control unit 110 may further include a benefit integrating part 115 so that the card benefits, which are adjusted per unit of one day, per unit less than the unit of one day, or in real time, can be integrated, thereby enabling the integrated card benefits to be applied as the user's card benefit rate.

Moreover, a collection period of the card usage history information is set to the past 30 days, 60 days, 90 days, 180 days or the like based on a time at which adjustment for card benefits is required so that the card benefits can be adjusted. This is because it is difficult for the user to determine card usage pattern information having high reliability when the automatic card benefit adjusting service is performed based on information collected in a short period. Thus, by allowing sufficient time data concerning the user's payment patterns using a credit card or check card will be accumulated, it is desirable to collect information during the period.

In such a method according to the present invention, since a future card benefit rate is automatically adjusted by reflecting the card user's usage history per the unit of one day, per unit less than the unit of one day, and in real time, useless benefits caused due to the fixed benefit rate for an item from which no consumption occurs are automatically reduced. In reverse, the benefit rate for an item for accounting for high consumption is adjusted to increase so that more benefits can be provided to the item showing high consumption according to necessity of the relevant consumer. This is effective to most rapidly maximize the economic utility of card payment of the relevant consumer.

### Third Embodiment

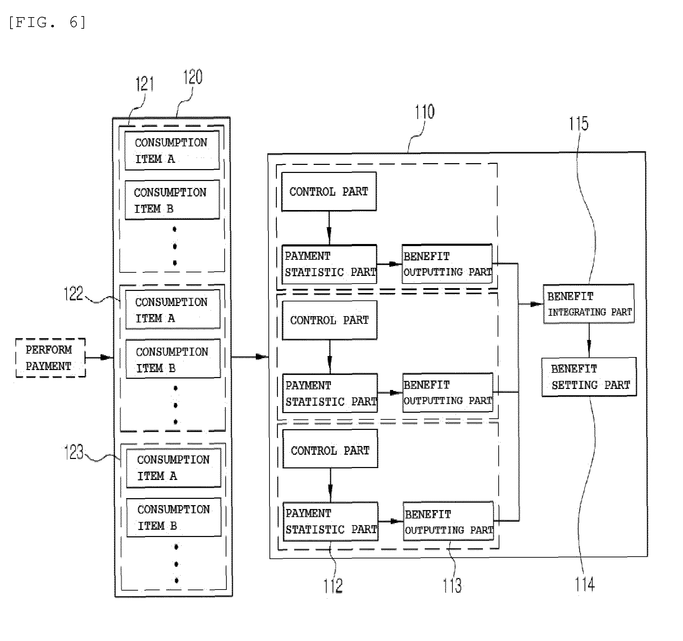

In the third embodiment compared to the first embodiment and the second embodiment in which the card benefit rate is adjusted according to each payment amount in the card usage history information, as illustrated in FIG. 6, in addition to the payment amount, a payment information database unit 120 is divided into a payment amount database part 121, a database part for the number of times being paid 122, and a payment location database part 123 so that card usage information can be managed and stored. The card usage information except for the payment amount, for example, the number of times being paid for the same item using a card, or a location where payment is performed, may be used as a condition for adjusting the card benefits.

For example, in the case where a consumer performs payment with regards to a 'coffee'-related consumption item every day, he or she has high necessity of consumption for the 'coffee'-related consumption item which is a continuous consumption item. Thus, with regards to the high number of times being paid, the card benefit rate for the relevant item may be highly adjusted so that additional benefits in addition to the adjusting of the card benefit rate by the payment amount can be provided.

Furthermore, when the location of an affiliated store where payment for the 'coffee' related consumption item is carried out is focused on any one place, it is deemed that consumption is repeatedly generated in the same region. Additionally, the card benefit rate may be more highly adjusted.

Furthermore, when a specific consumer's card payment is intensively performed in a specific day of the week (for example, Friday), since it is predicted that there is a probability that the consumer's card spending will increase in the corresponding day, a card benefit rate of the specific day may be highly adjusted so that more favorable benefits can be provided to the consumer.

In the card benefit providing system and method for automatically adjusting card benefits for each customer by applying card usage information according to the first to third embodiments of the present invention, with regards to comparison of a discount amount according to a current card benefit pattern with a discount amount according to another card benefit pattern, when a difference between the discount amounts is greater than an amount predetermined by a card company which desires to receive the automatic card benefit adjusting service, the card benefits may be adjusted to be matched with the card benefit pattern that results in a higher discount amount.

That is, comparing the discount amount according to a current card benefit pattern with the discount amount according to another card benefit pattern during the period predetermined by the card company which desires to receive the automatic card benefit adjusting service,

when the discount amount according to the other card benefit pattern is greater than the discount amount according to the current card benefit pattern beyond the amount predetermined by the card company which desires to receive the automatic card benefit adjusting service, the benefit control unit 110 of the benefit managing server 100 may adjust the card benefits to be matched with the other card benefit patterns.

In this case, the card benefit pattern means a pattern in which card benefits are fixed based on main card benefits predetermined by the card company which desires to receive the automatic card benefit adjusting service. As one example, a card benefit rate for each consumption item may be fixed in such a manner that card benefit pattern A is focused on shopping, card benefit pattern B is focused on oil changes, card benefit pattern C is focused on education, and card benefit pattern D is focused on leisure activities.

Moreover, the predetermined amount for comparison of the main card benefit pattern and the other card benefit pattern during the predetermined period may be changed by the card company which desires to receive the automatic card benefit adjusting service.

The automatic card benefit adjusting service may be carried out using the user's card usage pattern information according to a request of the card company which desires to receive the automatic card benefit adjusting service, a request of the user who desires to receive the automatic card benefit adjusting service, or a predetermined cycle.

This is because it is difficult for the user to determine card usage pattern information having high reliability when the automatic card benefit adjusting service is performed based on information collected in a short period. Thus, by allowing sufficient time data concerning the user's payment patterns using a credit card or check card will be accumulated, it is desirable to collect information during the period.

Furthermore, the benefit control unit 110 of the benefit managing server 100 may transmit information about a card benefit, such as a discount or saving, currently provided to the user to a mobile terminal 1 that is pre-registered by the user who desires to receive the automatic card benefit adjusting service through a text message (SMS, MMS, or the like). The benefit control unit 110 may also transmit information about a card benefit, such as an expected discount or saving, which is adjusted by analysis of the user's propensity to consume by the benefit control unit 110.

In this case, when the same amount is used for convenient understanding of the user, a card benefit, such as a discount or saving, which may be additionally provided, may be separately displayed and transmitted.

In addition, the user may receive information about an actually discounted amount or an actually saved mileage resulting from the automatic card benefit adjusting service to the mobile terminal 1 through a text message on a first payment date that is coming after card benefits for specific consumption items have been changed by the automatic card benefit adjusting service. Thus, the user may actually enjoy the automatic card benefit adjusting service, and may easily confirm the card benefits provided thanks to the automatic card benefit adjusting service.

Furthermore, the card benefit providing system and method for automatically adjusting card benefits for each customer by applying card usage information according to the embodiment of the present invention may further include a backup server 200 and a security server 300.

The backup server 200 may backup information stored in the benefit managing server 100, namely, users' card usage history information, which is stored in a database according to each customer, according to a predetermined cycle or an external request. Thus, even if the benefit managing server 100 causes a problem due to an accident or the like, the customized automatic card benefit adjusting service, which is optimized according to the card usage history information for each customer, may be continuously easily provided.

In the case where a third party arbitrarily connects to a network using a separate means, information about credit cards or check cards, as well as the users' card usage history information, which are personal information, may leak out. Due to this, the security server 300 may control network access and such various pieces of information according to a security policy predetermined in the security server 300.

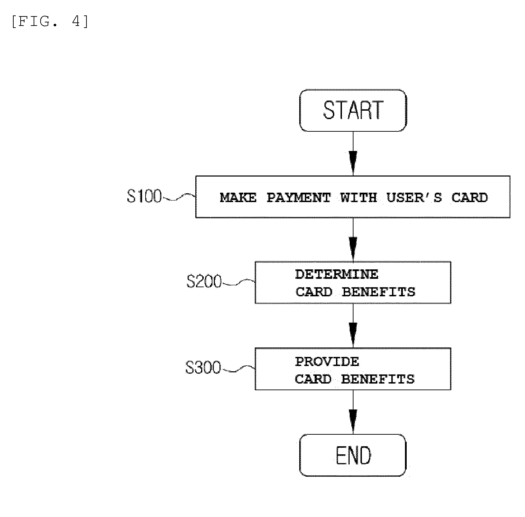

FIG. 4 is a flow chart showing a card benefit providing method for automatically adjusting card benefits for each customer by applying card usage information according to an embodiment of the present invention. The card benefit providing method for automatically adjusting card benefits for each customer by applying card usage information according to the embodiment of the present invention will be described in detail with reference to FIG. 4.

The card benefit providing method for automatically adjusting card benefits for each customer by applying card usage information according to the embodiment of the present invention may include: making a payment with a card (S100), determining card benefits (S200); and providing the card benefits (S300).

The making of a payment with a card (S100) may include performing a payment action in a card affiliated store using a credit card or check card possessed by a user who desires to receive an automatic card benefit adjusting service.

Thus, the determining of card benefits (S200) may include adjusting and determining, by the benefit control unit 110 of the benefit managing server 100, the card benefits according to card usage history information by the making of a payment with a card (S100).

That is, when the user makes a payment with a credit card or check card, it is determined whether the item from which consumption is generated is any consumption item among various consumption items that are predetermined by the card affiliated store in which payment is performed, thereby enabling determination of the card usage history information so that the card benefits can be adjusted and determined.

The providing of card benefits (S300) may include providing the card benefits determined through the determining of card benefits (S200).

In such a case, the determining of card benefits (S200) may include adjusting and determining the card benefits through the aforesaid first embodiment to the third embodiment.

Thus, when the user who desires to receive the automatic card benefit adjusting service makes payment with his or her credit card or check card, the user may receive more advantageous card benefits for the consumer (a user, or a card customer) without any inconvenience the consumer should self-check his or her propensity to consume and change the kind of a card according to the result or should change the content of card benefits provided to him or her. That is, a benefit rate (a discount rate or saving rate) provided to the user may be automatically adjusted and applied by the benefit managing server based on the card usage history information of the user, and the user may enjoy the card benefits resulting therefrom.

Moreover, in the card benefit providing method for automatically adjusting card benefits for each customer by applying card usage information according to an embodiment of the present invention, as illustrated in FIG. 5, the time at which the card benefits are adjusted may be predetermined before the user performs payment, and thereafter, new card benefits may be deducted by reflecting the details of card payment performed during a specific period upon approaching the predetermined time. In connection with this, the new card benefits may be deducted and provided by setting a specific period intended for reflecting the details of card payment, and then extracting card payment information accumulated during the set collection period.

In detail, before carrying out payment with a card (S100), the method may further include setting a period (S10), namely setting a time at which the card benefits are adjusted, and a period for the collection of card usage history information.

After the time at which card benefits are adjusted and the period for the collection of card usage history information have been set in the setting of a period (S10), a payment action by the making of payment with a card (S100) may be performed.

The determining of card benefits (S200) may include: storing and managing, by the payment information database unit 120, the card usage history information resulting from the making of a payment with a card (S100) in a database;
determining, by the benefit control unit 110, the approaching of a time at which the card benefits determined through the setting of a period (S10) are adjusted;
extracting, by the payment statistic part 112, card usage history information accumulated during a collection period for the card usage history information set through the setting of a period (S10) according to conditions for changing the card benefits entered by the condition part 111 when the time at which the card benefits are adjusted has come, thereby deducting new card benefits.

Subsequently, the providing of card benefits (S300) may include providing card benefits newly determined through the determining of card benefits (S200).

That is, in other words, the card benefit providing system and method for automatically adjusting card benefits for each customer by applying card usage information according to the embodiments of the present invention may automatically adjust a discount rate or a mileage saving rate by analyzing the propensity to consume of the users who use or possess credit cards or check cards through the benefit managing server 200 so that users can receive customized card benefits, which are optimized for each user.

Although the invention is described with reference to specific items such as specific structural elements, to merely some embodiments, and to drawings, such specific details disclosed herein are merely representative for purposes of helping more comprehensive understanding of the present invention. The present invention, however, is not limited to only the example embodiments set forth herein, and those skilled in the art will appreciate that the present invention can be embodied in many alternate forms.

Accordingly, the present invention is intended to cover not only the embodiments, but also various alternatives, modifications, equivalents and other embodiments that may be included within the spirit and scope of the present invention as defined by the appended claims.

### [Description of the Reference Numerals]

- 100:: Benefit managing server
- 200:: Backup server
- 300:: Security server

## Claims

1. A card benefit providing system for automatically adjusting card benefits for each customer by applying card usage information, the card benefit providing system comprising:
a benefit managing server (100) including a benefit control unit (110) controlling, in an integrated manner, providing of card benefits according to card usage history information in connection with a payment action using a card possessed by a customer who desires to receive an automatic card benefit adjusting service; and a payment information database unit (120) storing and managing the card usage history information according to each customer in a database.

2. The card benefit providing system of claim 1, wherein the benefit control unit (110) of the benefit managing server (100) analyzes an amount spent on each of the various predetermined consumption items using the card usage history information, and then controls card benefits according to the amount spent on each of the various consumption items.

3. The card benefit providing system of claim 2, wherein the benefit control unit (110) of the benefit managing server (100) divides the amount spent on each of the various consumption items into predetermined sections and applies card benefit providing rates matched with the respective sections corresponding to the amount spent on each of the various consumption items, thereby enabling the card benefits to be provided.

4. The card benefit providing system of claim 2, wherein the benefit control unit (110) of the benefit managing server (100) repeatedly increases the card benefits to the extent of a predetermined value when the amount spent on each of the various consumption items is greater than the predetermined value or repeatedly reduces the card benefits to the extent of the predetermined value when the amount spent on each of the various consumption items is less than the predetermined value.

5. The card benefit providing system of claim 2, wherein the benefit control unit (110) of the benefit managing server (100) analyzes a payment amount spent on each of the various consumption items, the number of times being paid, a day when payment is performed, and a location where payment is carried out based on the card usage history information and then additionally adjusts the card benefits based on information about the payment amount spent on each of the various consumption items, the number of times being paid, the day when payment is performed, and the location where payment is carried out.

6. The card benefit providing system of claim 2, wherein the benefit control unit (110) of the benefit managing server (100) adjusts the card benefits to be matched with another card benefit pattern when a discounted amount resulting from the other card benefit pattern is greater than a discounted amount resulting from a current card benefit pattern beyond a predetermined amount by comparing the discounted amount resulting from the current card benefit pattern with the discounted amount resulting from the other card benefit pattern which is adjusted and provided for each of the various consumption items.

7. The card benefit providing system of claim 2, wherein the benefit control unit (110) of the benefit managing server (100) is connected to the benefit managing server (100) via a network and transmits current card benefit information, expected card benefit information adjusted and provided according to each of the various consumption items, and an expected discount amount resulting from adjusted card benefits to a mobile terminal (1) held by the customer.

8. The card benefit providing system of claim 1, further comprising:
a backup server (200) connected to the benefit managing server 100 via a network and backing up various pieces of information stored in the benefit managing server (100) according to a predetermined cycle or an external request; and
a security server (300) protecting the information stored in the benefit managing server (100) according to a predetermined security policy.

9. A card benefit providing method for automatically adjusting card benefits for each customer by applying card usage information, the card benefit providing method comprising:
making a payment with a card (S100) of performing a payment action using a credit card or a check card possessed by a customer who desires to receive an automatic card benefit adjusting service;
determining, by a benefit managing server, card benefits (S200) of adjusting and determining the card benefits according to card usage history information resulting from the making of payment with a card (S100); and
providing, by the benefit managing server, the card benefits (S300) of providing the card benefits determined through the determining of card benefits (S200).

10. The card benefit providing method of claim 9, wherein the determining of card benefits (S200) includes: analyzing an amount spent on each of the various predetermined consumption items using the card usage history information and then adjusting the card benefits according to the amount spent on each of the various consumption items; and
dividing the amount spent on each of the various consumption items into predetermined sections, and applying card benefit providing rates matched with the respective sections corresponding to the amount spent on each of the various consumption items, thereby providing the card benefits.

11. The card benefit providing method of claim 9, wherein the determining of card benefits (S200) includes: analyzing an amount spent on each of various predetermined consumption items using the card usage history information, and then controlling the card benefits according to the amount spent on each of the various consumption items; and
repeatedly increasing the card benefits to the extent of a predetermined value when the amount spent on each of the various consumption items is greater than the predetermined value, or
repeatedly reducing the card benefits to the extent of the predetermined value when the amount spent on each of the various consumption items is less than the predetermined value, thereby adjusting and determining the card benefits.

12. The card benefit providing method of claim 9, wherein the determining of card benefits (S200) includes analyzing a payment amount spent on each of the various predetermined consumption items using the card usage history information, the number of times being paid, a day when payment is performed, and a location where payment is carried out and then additionally highly adjusting the card benefits based on information about the payment amount spent on each of the various consumption items, the number of times being paid, the day when payment is performed, and the location where payment is carried out.

13. The card benefit providing method of claim 9, wherein the determining of card benefits (S200) includes: analyzing an amount spent on each of various predetermined consumption using the card usage history information, and then adjusting the card benefit according to the amount spent each of the various consumption items; and
adjusting and determining the card benefits to be matched with another card benefit pattern when a discounted amount resulting from the other card benefit pattern is greater than a discounted amount resulting from a current card benefit pattern beyond a predetermined amount by comparing the discounted amount resulting from the current card benefit pattern with the discounted amount resulting from the other card benefit pattern which is adjusted and provided for each of the various consumption items.
